# EUROPEAN PATENT SPECIFICATION

(11) **EP 0 496 703 B1**
(45) Date of publication and mention of the grant of the patent: **25.05.1994**
(21) Application number: 92810032.0
(22) Date of filing: 21.01.1992
(51) Int. Cl.: A61C 17/00

(54) **Ablator for use in dentistry**
Reinigungsinstrument für die Zahnheilkunde
Outil de nettoyage utilisé en dentisterie

(30) Priority: 23.01.1991 CH 184/91
(43) Date of publication of application: 29.07.1992
(73) Proprietor: Hawe-Neos Dental Dr. H. von Weissenfluh S.A., 6925 Gentilino (CH)
(72) Inventor: v. Weissenfluh, Beat A., CH-6925 Gentilino (CH); Saxer, U. P., Prof. Dr., CH-8032 Zürich (CH); Guggenheim, B., Prof. Dr., Zahnärztliches Institut, CH-8028 Zürich (CH); Baffelli, Gianni, CH-6850 Tesserete (CH)
(74) Representative: AMMANN PATENTANWAELTE AG BERN

(56) References cited:
- EP-A- 0 001 013
- EP-A- 0 168 059
- EP-A- 0 337 443
- EP-A- 0 425 357
- EP-A- 3 862 065
- US-A- 3 660 902
- PATENT ABSTRACTS OF JAPAN vol. 13, no. 260 (C-607)(3608) 15 June 1989

## Description

The present invention has as its object an ablator for use in dentistry.

Present ablators, which are principally used to remove tartar, bacterial plaque and radicular cement, are manufactured of metal, usually of steel.

The use of these metal instruments very often involves an excessive removal of healthy tooth matter, which can cause hypersensitivity of the dentine.

The main object of the invention is to provide an ablator for use in dentistry which does not present these drawbacks and which has, as a whole, better mechanical strength as known ablators and which avoids abrasive action on natural and artificial tooth.

The document US-A-3,660,902 discloses a dental instrument with an interchangeable tool having an abrading effect. The tool is made of a thermoplastic material. A reinforcement by fibers is neither mentioned nor suggested.

European patent application no. 0,425,357 is a prior art in terms of Art. 54(3)(4). This document also discloses a dental instrument having exchangeable abrasive tools. The tool is made of a synthetic cast resin comprising abrasive bodies having a hardness greater than 25 mPa; these bodies may consist of glass fibers. The instrument as such is not reinforced by fibers.

The handles described in both documents do not contain reinforcing fibers.

The above mentioned object is attained by the new ablator according to the claims.

In a preferred embodiment, the ablator is subsequently reinforced against wear by a modification in the surface molecular structure of the synthetic resins by means of a process of ionic implantation or of other coating processes having similar effects.

The attached drawing represents a non-limiting preferred embodiment of the ablator that is the object of the invention.

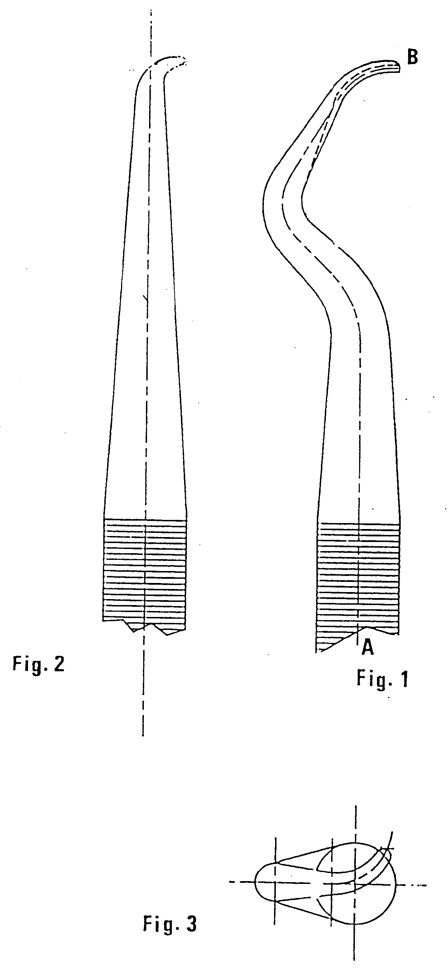

- Figure 1: represents it in lateral view.
- Figure 2: represents it in lateral view and rotated by 90° with respect to figure 1.
- Figure 3: represents in in front view.

The ablator is made of a thermoplastic synthetic polyamide resin like nylon, or other polyamide resins, but a preferred embodiment provides the use of synthetic resins belonging to the group of polyarylamids.

The reinforcing fibers are made of carbon and they are completely incorporated into the synthetic resin of the ablator. Furthermore, they are arranged essentially parallel to the longitudinal axis of the ablator itself.

These latter have a relatively high module of elasticity (>15,000 N/mm²) with respect to that other resins commonly used (ca. 4 + 5,000 N/mn²), moreover they are endowed with extreme fluidity in the liquid state, so that the ablators obtained with their use already exhibit the final sharpening of the cutting edge at the end of the thermoplastic stamping itself without the need for repeated operations. Moreover they prove to be easily resharpened.

A subsequently improved result as to resistance to wear by abrasion is obtained by modifying the surface molecular structure of the ablator made polyarylamides by a process of ionic implantation or other processes of coating having similar effects.

In this way the endurance of the sharpened edge is prolonged, while at the same time the ablator's resistance to wear is increased.

By means of the embodiment variations cited the characteristics of resistance to flexion and abrasion can be modified, thus also the resistance characteristics of the sharpened edge as well as the possibility of resharpening the ablator.

This also involves a possibility of adapting the instrument itself to the type of procedure and to the context in which the procedure itself is done.

For example, the above mentioned characteristics can be adapted in various manners depending on whether work is being done on radicular cement or on an implant or on delicate metal components such as pins, etc.

The shape of the ablator and the nature of the materials used can vary in any case, while remaining within the scope of protection of the patent conferred by the attached claims.

## Claims

1. Ablator for use in dentistry, having a generally longitudinal axis and being made of synthetic resins reinforced by fibers to resist mechanical stresses, said synthetic resins belonging to the group of polyamides, said fibers consisting of carbon fibers, being totally incorporated within the polyamide resin and being arranged substantially parallel to the longitudinal axis of the ablator.

2. Ablator according to claim 1, wherein the polyamide resin belongs to the group of polyarylamides.

3. Ablator according to claim 1, wherein the ablator is further reinforced against wear due to abrasion by means of a process of ionic implantation that modifies the superficial molecular structure of the synthetic resins.

4. Ablator according to claim 2, wherein the ablator is further reinforced against wear due to abrasion by means of a process of ionic implantation that modifies the superficial molecular structure of the synthetic resins.

5. Ablator according to claim 2, wherein the synthetic resins have a modulus of elasticity greater than 15,000 N/mm².

## Patentansprüche

1. Kürette zur Verwendung in der Zahnmedizin, mit einer allgemeinen Längshauptachse und hergestellt aus faserverstärkten synthetischen Harzen zwecks Widerstandsfähigkeit gegenüber mechanischen Beanspruchungen, wobei die genannten synthetischen Harze zur Gruppe der Polyamide gehören und die genannten Fasern aus Kohlenstoffasern bestehen, die vollständig un das Polyamidharz eingelagert sind und im wesentlichen parallel zur Längsachse der Kürette ausgerichtet sind.

2. Kürette nach Anspruch 1, worin die Polyamidharze zur Gruppe der Polyarylamide gehören.

3. Kürette nach Anspruch 1, worin die Kürette gegen Abriebs-Abnutzung weiterhin durch ein Verfahren der Ionenimplantation verstärkt ist, welches die Oberflächen-Molekularstruktur der synthetischen Harze modifiziert.

4. Kürette nach Anspruch 2, worin die Kürette gegen Abriebs-Abnutzung weiterhin durch ein Verfahren der Ionenimplantation verstärkt ist, welches die Oberflächen-Molekularstruktur der synthetischen Harze modifiziert.

5. Kürette nach Anspruch 2, worin die synthetischen Harze einen Elastizitätsmodul grösser als 15′000 N/mm² besitzen.

## Revendications

1. Curette pour l'utilisation en médecine dentaire, ayant un axe géneral longitudinal et étant fabriquée à partir de résines synthétiques renforcées par des fibres afin de résister aux sollicitations mécaniques, les dites résines synthétiques appartenant au groupe des polyamides, les dites fibres consistant en fibres de carbone totalement incorporées dans la résine de polyamide et étant arrangées substantiellement parallèlement à l'axe longitudinal de la curette.

2. Curette selon la revendication 1, dans laquelle la résine de polyamide appartient au groupe des polyarylamides.

3. Curette selon la revendication 1, dans laquelle la curette est davantage renforcée contre l'usure due à l'abrasion, au moyen d'un procédé d'implantation ionique qui modifie la structure moléculaire superficielle des résines synthétiques.

4. Curette selon la revendication 2, dans laquelle la curette est davantage renforcée contre l'usure due à l'abrasion, au moyen d'un procédé d'implantation ionique qui modifie la structure moléculaire superficielle des résines synthétiques.

5. Curette selon la revendication 2, dans laquelle les résines synthétiques présentent un module d'élasticité supérieur à 15′000 N/mm².
